Europäisches Patentamt

European Patent Office

Office européen des brevets

(11) Numéro de publication: **0 036 355**
**B1**

(12) **FASCICULE DE BREVET EUROPÉEN**

(45) Date de publication du fascicule du brevet:
**23.07.86**

(21) Numéro de dépôt: **81400340.6**

(22) Date de dépôt: **05.03.81**

(51) Int. Cl.⁴: **F 24 D 11/02**

(54) **Installation de chauffage pour locaux à usage d'habitation ou industriel.**

(30) Priorité: **19.03.80 FR 8006103**

(43) Date de publication de la demande:
**23.09.81 Bulletin 81/38**

(45) Mention de la délivrance du brevet:
**23.07.86 Bulletin 86/30**

(84) Etats contractants désignés:
**AT DE NL SE**

(56) Documents cité:
**DE-A-1 551 994**
**DE-A-2 540 004**
**DE-A-2 633 775**
**DE-A-2 811 586**
**GB-A-2 028 989**
**US-A-3 294 157**

(73) Titulaire: **SOCIETE NATIONALE ELF AQUITAINE (PRODUCTION), Tour Aquitaine, F-92400 Courbevoie (FR)**

(72) Inventeur: **Gueneau, Michel, Aulon, F-31420 Aurignac (FR)**

(74) Mandataire: **Levy, David, c/o S.A. Fedit- Loriot 38, avenue Hoche, F-75008 Paris (FR)**

EP 0 036 355 B1

## Description

La présente invention concerne une installation de chauffage pour locaux à usage d'habitation ou industriel.

Depuis longtemps, des tentatives sont faites pour chauffer et/ou refroidir des locaux à usage d'habitation ou industriel, en utilisant des techniques procurant un coefficient de performances le plus élevé possible et ce, pour réduire la consommation de l'énergie primaire et plus particulièrement les produits pétroliers à partir desquels sont extraits les combustibles à usage domestique. De plus en plus, des recherches sont entreprises pour utiliser des énergies nouvelles et/ou pour remettre en vigueur des énergies susceptibles d'être mises en oeuvre dans les techniques à grand coefficient de performance.

C'est ainsi que notamment les installations de chauffage faisant appel à la pompe à chaleur voient leur intérêt augmenter et ce, en raison du fait que la pompe à chaleur est un appareil capable de transférer des calories non utilisables directement prélevées sur une source de chaleur à basse température, vers un autre milieu où ces calories sont alors à une température suffisante dans certaines conditions pour être utilisables.

Parmi les installations de chauffage utilisant la pompe à chaleur, il en existe certaines qui sont basées sur un échange eau-eau, sol-eau, eau-eau et sol-air, car en employant des mélanges spéciaux de fluides frigorigènes tels que le fréon, on peut augmenter les températures du fluide de chauffage de plusieurs dizaines de degrés. Toutefois, ce type d'installation nécessite des sources d'eau importantes telles que lacs, nappes phréatiques ou un terrain adéquat dans le cas d'une pompe à chaleur sol-eau.

Pour se soustraire à l'obligation de la disponibilité d'une source importante d'eau ou d'un terrain approprié, il a été préconisé d'utiliser une pompe à chaleur basée sur un échange air-eau ou air-air.

Pour tirer partie de la source froide que constitue l'air extérieur et l'utiliser à des températures moins négatives, on a proposé de réchauffer cet air par une source de chauffage indépendante pour l'amener à la température d'utilisation, soit au-dessus de 0°C. Cette technique, pour séduisante qu'elle paraisse, ne donne pas entièrement satisfaction car elle doit être adaptée aux conditions climatiques extérieures. De plus, elle nécessite l'emploi d'une source de chaleur indépendante et donc l'utilisation d'une énergie supplémentaire à celle fournie à l'installation de chauffage. C'est d'ailleurs le cas de la plupart des pompes à chaleur utilisant l'air extérieur comme source froide. En effet, le coefficient de performance de la pompe à chaleur est d'autant meilleur que la température extérieure est élevée alors que les besoins énergétiques du local à chauffer décroissent.

Pour éviter des installations prohibitives quant au prix et à l'encombrement, les fabricants proposent des systèmes mixtes où la pompe à chaleur est selon les cas relayée ou complétée aux basses températures extérieures par un chauffage d'appoint conventional tel que brûleur ou résistance électrique. Le point d'équilibre économique pour lequel la pompe à chaleur est juste adaptée en puissance au local à chauffer se situe entre −2°C et +6°C en général; pour des points d'équilibre supérieurs à +6°C, le coefficient de performance annuel est dégradé par le mauvais coefficient de performance du chauffage d'appoint conventionnel; pour des points d'équilibre inférieurs à −2°C, les dimensions de la pompe à chaleur deviennent inacceptables et notamment celles de l'évaporateur.

Enfin, il est à noter que les pompes à chaleur utilisant l'eau comme source chaude, ne sont pas adaptables sans chauffage d'appoint aux installations de chauffage existantes. Quant aux installations de chauffage neuves, elles nécessiteraient des investissements plus élevés en raison des dimensions plus grandes des surfaces de chauffe du fait des limitations techniques et économiques afférentes à la température de l'eau chaude.

Le brevet GB—A—2 028 989 concerne une installation de chauffage de locaux comportant un moteur à combustion interne, une pompe à chaleur dont le compresseur est entraîné par ledit moteur dont les calories produites par les gaz d'échappement sont cédées au fluide de chauffage. Toutefois, le liquide de chauffage transite par des échangeurs auxiliaires et le dispositif comprend un frein hydraulique commandé par le moteur pour assurer un apport supplémentaires de chaleur, tout ceci augmentant considérablement les conduites nécessaires entre le moteur et les organes de chauffage, et donc l'encombrement, en plus des pertes de chaleur inhérentes au passage du liquide dans les échangeurs auxiliaires.

Le brevet DE—A—15 51 994 concerne, dans une variante, une installation de chauffage dans laquelle le compresseur de la pompe à chaleur constitue la charge principale d'un moteur thermique dont seuls les gaz d'échappement sont utilisés pour chauffer le liquide de chauffage, l'apport supplémentaire de calories étant fourni par la pompe de chaleur. Cependant, le moteur n'est pas immergé dans le liquide de chauffage et l'installation ne comprend pas de moyens pour optimiser le fonctionnement du moteur en fonction de la température du liquide de chauffage.

Le brevet US—A—3 294 157 décrit une installation de chauffage dans laquelle un moteur thermique est immergé dans une enceinte pleine de liquide de chauffage qui circule entre ladite enceinte et des organes de chauffage. Une telle installation ne comprend notamment pas des moyens de régulation en vue d'optimiser le fonctionnement du moteur en fonction de la température du liquide de chauffage.

L'invention telle qu'elle est caractérisée dans les revendications résout le problème consistant à faire appel à un chauffage d'appoint lorsque les températures varient dans une large plage, d'une part, en insérant un ballon de réserve entre les organes de chauffage et le moteur thermique, et

2

dont le liquide qui y est contenu est porté à une température élevée prédéterminée lorsque le moteur thermique est en fonctionnement, et, d'autre part, en régulant le fonctionnement du moteur thermique selon que le ballon de réserve est plein ou vide.

Les avantages obtenus grâce à cette invention consistent essentiellement à permettre d'obtenir un rendement élevé avec une limitation maximum des déperditions calorifiques dans les conduites de circulation entre l'enceinte et les organes de chauffage.

En outre, la réserve d'eau chaude ainsi introduite permet d'améliorer considérablement la régulation de l'installation en augmentant l'inertie du système et, en conséquence, de diminuer la fréquence des cycles de marche pour favoriser la longévité du moteur et diminuer les régimes transitoires sur le circuit frigorifique.

Enfin, en faisant passer les gaz d'échappement dans un échangeur immergé également dans le fluide de l'enceinte, on contribue à l'élévation en température du fluide d'alimentation des éléments de chauffage.

L'invention sera mieux comprise à la lecture de la description détaillée qui va suivre et à l'examen des dessins annexés qui représentent, à titre d'exemple non limitatif un mode de réalisation de l'invention. Sur ces dessins:

La figure 1 est une vue en perspective des principaux organes de l'installation selon l'invention.

La figure 2 est une vue en coupe verticale de l'installation selon l'invention.

La figure 3 est une représentation synoptique du système de régulation.

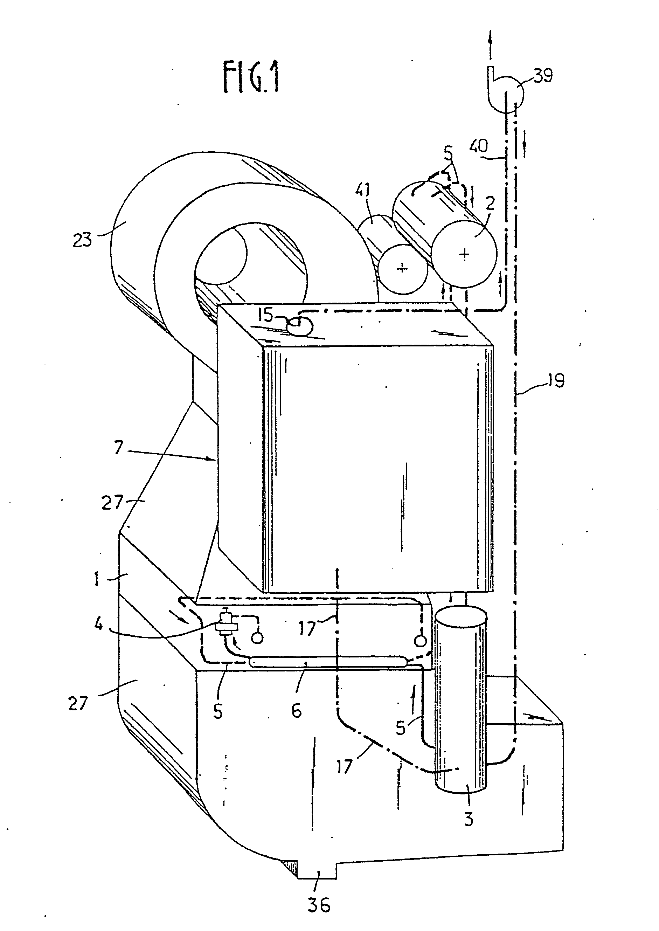

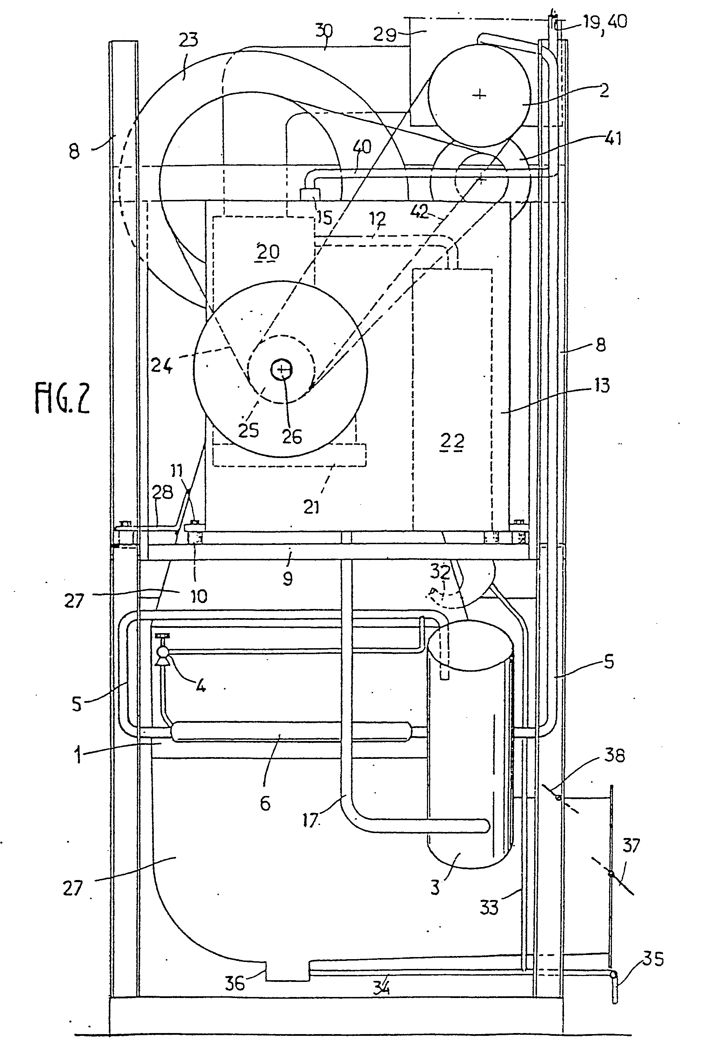

En se référant aux figures 1 et 2, l'installation de chauffage selon l'invention comporte notamment une pompe à chaleur constituée par un évaporateur 1, un compresseur 2, un condenseur 3 et un détendeur 4, ces différents organes étant reliés par un ensemble de conduites référence 5 et dans lequel circule un fluide frigorigène tel que du fréon. Toute la structure de la pompe à chaleur est bien connue des spécialistes et ne sera pas décrite dans le détail. Toutefois, on notera qu'une bouteille "anticoup" échangeur 6 fréon liquide-fréon gazeux est interposée dans la partie du circuit où a lieu cette transformation, ce qui permet d'améliorer le coefficient de performance de l'installation ainsi que l'alimentation du détendeur, tout en protégeant les clapets du compresseur.

Une chaudière 7 constituée par une enceinte insonorisée est montée, à la partie supérieure d'une enveloppe 8 ou carrosserie extérieure également insonorisée, sur une plaque d'appui 9 et immobilisée sur cette dernière et par rapport à l'enveloppe extérieure 8 par tout moyen approprié tel que profilé de support et pieds de fixation 10 ancrés par des boulons et écrous 11. La chaudière 7 est alimentée en fluide de chauffage, en l'occurence de l'eau, à partir du condenseur 3 et par l'intermédiaire de la conduite 17; le condenseur 3 étant alimenté par une conduite de retour 19 du circuit d'alimentation et d'évacuation de l'eau de chauffage du local à chauffer.

Un moteur thermique 20, résistant, faible et parfaitement étanche est immergé dans l'eau remplissant la chaudière 7, ledit moteur étant fixé sur une console 21 et alimenté en énergie à partir d'une source non représentée.

Toutes les faces du moteur 20 sont dans l'eau à l'exception du carter de régulation sur lequel sont positionnés le remplissage d'huile, l'admission d'air et de carburant ou la pompe d'injection de fuel oil domestique, d'un petit tunnel pour la bougie ou l'injecteur et d'une sortie pour une prise de force.

Une vanne trois voies ou une vanne thermostatique 15 laisse passer le débit d'eau nécessaire pour maintenir constante autour de 80—85°C la température de l'eau dans la chaudière 7. Par ailleurs, dans une conduite 40 est monté un régulateur, non représenté, qui commande le fonctionnement du moteur 20 en fonction de la température de départ de l'eau hors de l'installation, le point de consigne étant réglé par itération commandée par la température ambiante. Une conséquence est d'optimiser le fontionnement du circuit du fluide frigorigène dont le coefficient de performance est d'autant meilleur que la température d'eau chaude est plus basse.

Dans la chaudière 7 est monté un échangeur gaz-eau 22 constitué par une colonne résistant à la corrosion (par exemple en acier inoxydable ou en métal revêtu d'émail ou de téflon). La colonne 22 est reliée directement par un conduit 12 à l'échappement du moteur 20 de façon que les gaz d'échappement soient évacués à travers ladite colonne 22 et circulent à contre-courant de l'eau provenant du condenseur 3.

Un ventilateur 23 entraîné par le moteur 20 par l'intermédiaire d'une courroie 24 et d'une poulie 25 calée sur un arbre de sortie 26 du moteur 20, aspire l'air emprisonné dans l'enveloppe 8 qui communique avec l'extérieur par une conduite 29. L'évaporateur 1 de la pompe à chaleur est placé sur le circuit d'aspiration du ventilateur. Une gaine souple 27 est maintenue aux endroits appropriés par des profilés ou cornières 28 fixés sur la plaque d'appui et de support 9. Une prise d'air 30 pour le moteur 20 est installée sur l'arrivée d'air extérieur ou au refoulement du ventilateur après l'évaporateur.

Les gaz d'échappement, après leur passage dans la colonne 22 et à la sortie d'un conduit 32 relié à la colonne 22 sont, selon les cas, mélangés directement à l'air extérieur ou dirigés sur un tube non représenté tenant lieu d'échangeur et placé à l'intérieur de la gaine souple 27 dans la partie située en amont de l'évaporateur dans le circuit d'air afin que lesdits gaz cèdent leurs calories à l'air extérieur aspiré par le ventilateur 23. Ainsi, on récupère une énergie et on l'utilise pour améliorer le coefficient de performance de l'installation en réchauffant l'air extérieur et sans qu'on fasse appel à une autre source d'énergie d'appoint. Les condensats des gaz d'échappement sont évacués par une conduite 33 débouchant dans une conduite collectrice générale 34 des condensats se formant à l'intérieur de la gaine et ruisselant le long des parois de ladite gaine. La conduite collectrice 34 est reliée à un siphon 35 d'évacuation des condensats. La conduite collectrice 34 est montée de façon inclinée par rapport à l'horizontale pour permettre une évacuation par gravité des condensats et débouche à son extrémité opposée à celle reliée au siphon 35 dans une gorge collectrice 36 ménagée à la partie inférieure de la gaine souple 27.

Au refoulement du ventilateur sont montés un volet 37 et un volet 38 dit de recyclage dont la fonction sera décrite dans le mode de fonctionnement de l'installation.

La circulation de l'eau est assurée par une pompe électrique 39 alimentée par le secteur ou par une batterie si l'on désire un fonctionnement autonome. Le ventilateur 23 et un alternateur 41 sont entraînés directement par la courroie 24, à partir du même arbre de sortie 26 du moteur 20. Le compresseur est entraîné à partir du même arbre de sortie 26 par la courroie 42.

Le fonctionnement de l'installation de chauffage selon l'invention est le suivant:

Le moteur 20 étant en fonctionnement, l'air remplissant l'enveloppe 8 est aspiré par le ventilateur 23. Cet air est réchauffé par les gaz d'échappement, avant de parvenir sur l'évaporateur 1. Après un échange thermique, au niveau de l'évaporateur 1, le fluide frigorigène circulant dans le circuit 5 est aspiré sous forme gazeuse par le compresseur 2 qui le porte à une température et à une pression élevée, pouis est refoulé dans le condenseur 3 où il se condense en fournissant des calories au liquide caloporteur traversant le condenseur 3 amené par la conduite 19. Le fluide frigorigène sort à l'état liquide du condenseur, passe dans l'échangeur 6 avant d'être détendu adiabatiquement par le détendeur 4, la détente adiabatique abaissant la température du fluide frigorigène.

A la sortie du condenseur, l'eau est à une température de plusieurs degrés plus élevée qu'à son entrée dans ledit condenseur. Cette eau par la conduite 17, parvient à la chaudière 7.

Les calories dissipées dans la chaudière 7 par le moteur 20 et l'échangeur gaz-eau 22 élèvant la température de l'eau jusqu'à environ 85°C. L'élévation de température de l'eau due aux passages dans le condenseur 3 et dans la chaudière 7 est suffisante pour fournir, via la pompe 39, de l'eau à la température de 85°C aux éléments de chauffage du local à chauffer.

Contrairement aux installations de chauffage du même type, celle de la présente invention et décrite ci-dessus peut fonctionner sans formation de givre ou avec formation de givre.

Lorsqu'on souhaite un fonctionnement sans formation de givre, on maintient toujours au-dessus de 0°C la température de l'air ou du mélange air-gaz d'échappement à la sortie de l'évaporateur en diminuant le volume d'air aspiré par le ventilateur 23 et en recyclant une partie de l'air ou du mélange air-gaz à la sortie du ventilateur. Pour ce fair, on amène les volets 37 et 38, montés au refoulement du ventilateur 23 dans la gaine 27, à leur position d'équilibre appropriée, par example au moyen d'un petit moteur électrique à double sens (non représenté) et d'un thermostat à deux contacts (non représenté) correspondant aux deux sens de rotation du petit moteur.

Pour une température de l'air ambiant au-dessous de 0°C, à la sortie de l'évaporateur, on interrompt l'admission d'air par fermeture du volet 37. La quantité de chaleur fournie par les gaz d'échappement est alors inférieure à la puissance frigorifique du compresseur. Dans ces conditions, le moteur 20 n'est plus suffisamment chargé et les calories qu'il dissipe thermiquement ne sont plus suffisantes pour assurer un débit d'eau chaude suffisant. On prévoit donc un régulateur de capacité (non représenté), commandé par la pression d'aspiration du compresseur, qui enverra directement du fréon chaud dans l'évaporateur sans passer par le condenseur et le détendeur. Le régulateur de capacité sera réglé de telle façon que les gaz d'échappement recyclés qui sont saturés en eau ne givrent pas dans l'évaporateur, et il sera prévu de mettre hors-circuit ledit régulateur lorsqu'on aspire de l'air extérieur.

La fermeture complète du volet 37 et l'ouverture complète du volet 38 est commandée par un thermostat non représenté.

Un fonctionnement de l'installation avec formation de givre implique une admission de l'air extérieur à toutes les températures. Lorsqu'une formation de givre est détectée, on supprime l'admission d'air par fermeture du volet 37 et on ouvre le volet 38 pour permettre le recyclage de l'air ou du mélange air-gaz. Dans ces conditions, le givre éventuellement formé est directement ou indirectement soumis à l'action des gaz d'échappement qui sortent aux environs de 100°C de l'échangeur 22. Le givre fond donc assez rapidement et l'opération est arrêtée par une manoeuvre inverse des volets à l'aide d'un thermostat (non représenté) placé à la sortie de l'évaporateur, dès que la température est au-dessus d'une valeur prédéterminée supérieure à 0°C. Pendant toute l'opération de dégivrage, le compresseur est débrayé et on maintient un couple résistant convenable sur le moteur en vue d'obtenir le maximum de calories sur les gaz d'échappement en augmentant la vitesse au maximum et en profitant du fait que le ventilateur absorbe, à vitesse maximum, une forte puissance dans la position de recyclage. On peut également profiter de cette période pour recharger la batterie.

La formation de givre peut être détecté par un capteur de pression différentiel d'air entre l'amont et l'aval de l'évaporateur ou par tout autre moyen approprié.

Les essais et les calculs ont montré que grâce à l'apport des calories des gaz d'échappement au niveau de l'évaporateur, on recule d'environ 4°C le domaine d'utilisation de la chaudière sans formation de givre sur l'évaporateur par rapport aux installations classiques comprenant le même

évaporateur et le même ventilateur. Cet avantage est important car le givre se forme en quantité importante dans les zones de température les plus courantes, entre −2°C et +6°C.

Pour des basses températures, en dessous de +6°C, le coefficient de performance et l'encombrement de la pompe à chaleur deviennent prohibitives et c'est la raison pour laquelle un chauffage d'appoint est incorporé dans les installations antérieures. Au contraire, dans l'installation suivant la présente invention, le moteur thermique continuera à fournir des calories parce que le compresseur 2 et le condenseur 3, bien que ne fournissant plus guère de calories, constituent la principale charge résistante ou couple résistant indispensable pour que le moteur thermique puisse fournir directement la majeure partie des calories nécessaires au chauffage de l'eau. A cet effet, le moteur thermique est surdimensionné par rapport à la puissance P qu'aurait le moteur s'il était calculé par une pompe à chaleur ne fonctionnant pas en-dessous d'une température ambiante limite comprise entre −2°C et +6°C. Ce surdimensionnement conduit à adopter une puissance fournie par le moteur thermique de l'ordre de 1,2 à 5 fois ladite puissance P.

Des essais ont montré que, une installation suivant l'invention ayant une puissance de 17,4 kwh entraînée par un moteur de 3,1 kwh et calculée pour une température extérieure de −10°C aurait sa puissance ramenée à 11,3 kwh avec un moteur de 1,8 kwh si on la calculait pour une température extérieure de 0°C.

Une autre caractéristique de l'invention est que l'installation de chauffage comprend une régulation dont le but est d'adapter en permanence la puissance de la chaudière au besoin réel du local à chauffer. Cette régulation permet, outre un meilleur coefficient de performance de la pompe à chaleur, de diminuer la fréquence de démarrage pour augmenter la longévité de certains organes tels que le moteur et le démarreur qui lui est associé.

Sans entrer dans le détail des formules bien-connues des techniciens, qui donnent une relation entre la température ambiante mesurée du local à chauffer, la température extérieure et la température de l'eau à la sortie de la chaudière, la présente invention fournit les moyens pour auto-réguler le fonctionnement de l'installation décrite ci-dessus et de réaliser ainsi un équilibre thermique du local à chauffer en respectant la température ambiante de consigne quelle que soit la demande calorifique du local à chauffer.

En effet, pour des raisons de bon fonctionnement du moteur thermique 20, ce dernier ne tourne pas à une vitesse inférieure à 2000 tr/mn, ce qui impose deux types de fonctionnement de l'installation suivant l'invention, et définis par une demande calorifique supérieure ou inférieure à la puissance fournie par ladite installation à 2000 tr/mn.

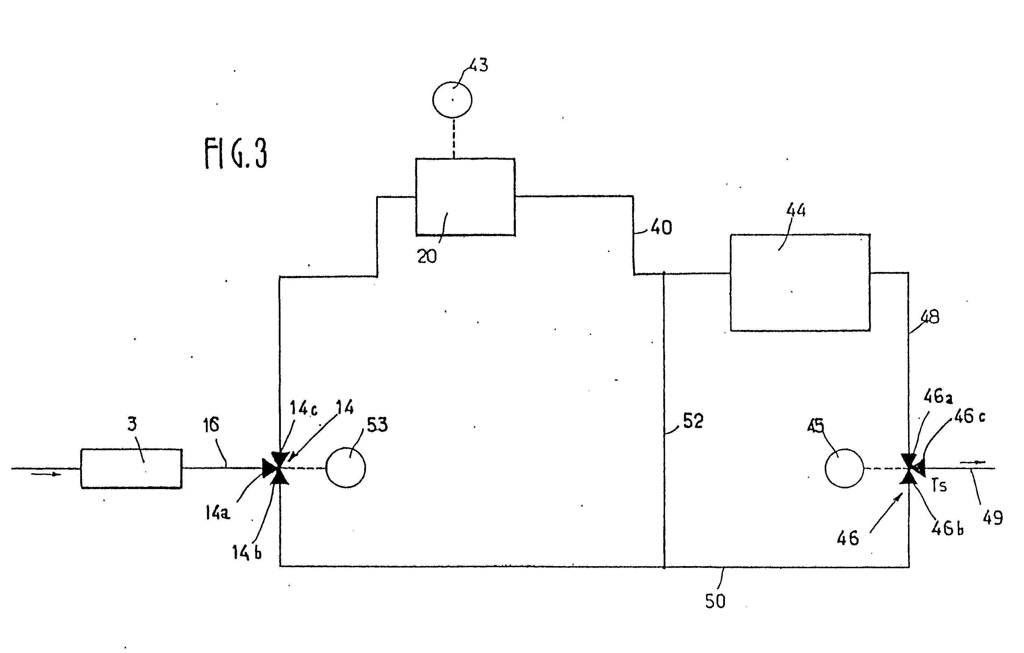

A cet effet, l'installation comprend (figure 3) un servomoteur 43 à double sens de rotation dont la vitesse de rotation est très faible, par exemple de l'ordre de 0,5 tr/heure et qui agit sur le régulateur de vitesse du moteur thermique 20. Le servomoteur 43 est commandé électroniquement en tout ou rien, dans les deux sens de rotation par l'écart ε entre une température de consigne à la sortie 13 de la chaudière (par exemple 80°C) et la température réelle de sortie. Lorsque ε>dT, dT étant égal par exemple à 1°C, on incrémente la consigne de vitesse du moteur, tandis que lorsque ε<−dT, on décrémente la consigne de vitesse du moteur.

Cette action sur la vitesse du moteur thermique 20 est répercutée très rapidement sur la température de sortie de l'eau de chaudière, ce qui permet d'avoir une installation de chauffage régulée et parfaitement stable. Ceci est dû au fait que la dissipation thermique dans l'eau de la chaudière varie dans le même sens que la vitesse de rotation du moteur.

La température de consigne, à la sortie de la chaudière, est calculée périodiquement par des moyens appropriés par exemple toutes les 5 mn, en fonction de la demande calorifique du local à chauffer, ceci permettant de travailler avec une température d'eau la plus basse possible en vue d'avoir un coefficient de performance maximum.

Pour permettre la régulation de l'installation (fig. 3), une vanne trois voies 14, commandée par un servomoteur 53 et dont l'entrée 14a est reliée à la sortie du condenseur 3 par un conduit 16 tandis que l'une des sorties 14c est reliée à la chaudière 7 par un conduit 17 et l'autre sortie 14b est reliée à un conduit 50. La sortie de la chaudière 7 est reliée à un ballon de réserve 44 par un conduit 40 dont une dérivation 52 est reliée au conduit 50.

Le servomoteur 53 est commandé par la température de l'eau de la chaudière.

Une vanne trois voies 46 commandée par un servomoteur 45 est reliée par une entrée 46b au conduit 50 par une autre entrée 46a à un conduit d'évacuation 48 du ballon 44 et par une sortie 46c à une conduite d'alimentation 49 des éléments de chauffage (non représentés) du local à chauffer.

Le ballon de réserve 44, rempli d'eau à une température voisine de la température de consigne (80°C) permet d'une part de stocker la surpuissance de la chaudière et donc d'augmenter la durée d'une période de fonctionnement du moteur 20 et, d'autre part, d'augmenter la durée de la période d'arrêt du moteur 20 en restituant au circuit de chauffage l'eau à 80°C contenue dans le ballon 44.

Pour maintenir le niveau de température de l'eau de sortie de chaudière à la température de consigne, on règle le débit de restitution de l'eau en réserve dans le ballon 44 au moyen du servo moteur 45 qui commande la vanne 46 réglant le débit de l'eau circulant dans le conduit 50 et le débit de l'eau provenant du ballon de réserve 44 et circulant dans le conduit 48.

Lorsque la demande calorifique du local à chauffer est supérieure à la puissance calorifique fournie pour une vitesse de rotation du moteur 20 égale à 2000 tr/mn, le moteur 20 tourne en permanence et l'eau provenant du condenseur 3 circule à travers la chaudière 7 et le conduit 52, 50·

et 49, l'entrée 46a étant fermée, tandis que les sorties 14b et 14c et l'entrée 46b sont ouvertes. La température de l'eau délivrée dans le conduit 40 est maintenue à la température de consigne (80°C). La température de l'eau dans la conduite 49 règle la vitesse de rotation du moteur 20 sous la commande du servomoteur 43 comme décrit ci-dessus, en fonction de l'écart ε mesuré.

Lorsque la demande calorifique du local à chauffer est inférieure à la puissance calorifique fournie pour une vitesse de rotation du moteur 20 égale à 2000 tr/mn, deux modes de fonctionnement peuvent être assurés: moteur à 2000 tr/mn ou moteur arrêté et ce, au moyen d'une commande, non représentée, qui est réglée pour la vitesse de 2000 tr/mn du moteur 20.

Lorsque la commande est enclenchée, le moteur 20 s'arrête. Le servomoteur ferme la sortie 14c de la vanne 14. L'eau provenant du conduit 16 circule à travers 14a, 14b, 50, 52. Si la température de sortie sur la conduite 49 décroît de trop, le servomoteur 45 commande la fermeture progressive de l'entrée 46b et l'ouverture progressive de l'entrée 46a de la vanne 46 permettant au ballon 44 de se vider de l'eau chaude dans la conduite 49 et de se remplir d'eau de retour par le conduit 52. La température de l'eau de sortie dans la conduite 49 n'est plus contrôlée et de ce fait s'abaisse rapidement. Cette chute de température est détectée et entraîne la mise en route du moteur 20 jusqu'à ce qu'il atteigne la vitesse de 2000 tr/mn. Pendant ce temps, le ballon de réserve 44 se remplit d'eau dont la température croît pour atteindre la température de consigne de 80°C. Pour ce faire, les voies 14b et 46a sont fermées et les voies 14c et 46b sont ouvertes.

Il se forme ainsi des cycles au cours desquels un arrêt du moteur 20 avec vidange du ballon de réserve 44 est suivi d'une remise en route du moteur 20 avec réchauffage de l'eau contenue dans le ballon 44 et ce, en fonction de la température de sortie de l'eau dans la conduite 49.

Les différents circuits électroniques de commande des servomoteurs 43 et 45 ainsi que les circuits de liaison n'ont été ni représentés ni décrits dans le détail car bien connus des spécialistes en la matière.

Pour les périodes où la température ambiante est comprise entre −2°C et +6°C environ, le moteur 20 fonctionnera si nécessaire en tout ou "peu" correspondant à une marche au ralenti du moteur, le compresseur étant débrayé et les volets en position de recyclage. Cette marche au ralenti présente l'avantage de diminuer le nombre de démarrages à des périodes où ils sont les plus fréquents et d'autoriser la fonction de dégivrage même en l'absence de givre pendant ces périodes de ralenti.

Bien entendu, la présente invention n'est pas limitée au mode de réalisation décrit ci-dessus mais en couvre au contraire les variantes. C'est ainsi que la commande de la fermeture du volet 37 peut être réalisée à partir du point de rosée donnée par un hygromètre et un thermomètre sec.

De plus, comme déjà indiqué, l'installation peut fonctionner avec utilisation de fuel domestique (gas-oil). Dans ce cas, et compte tenu du fait que les gaz d'échappment d'un diesel alimenté en fuel domestique sont corrosifs, on prévoiera soit, comme déjà indiqué, un échangeur protégé de la corrosion permettant de transférer à l'air les calories résiduelles des gaz d'échappement, soit un évaporateur et des gaines enduites de plastique résistant à la corrosion.

## Revendications

1. Installation de chauffage de locaux à usage d'habitation ou industriel, du type comportant une enveloppe insonorisée (8) dans laquelle sont disposés un moteur à combustion interne (20) monté dans une enceinte (7) remplie de liquide de chauffage, une pompe à chaleur (1 à 5) dont le compresseur (2) constitue la charge principale dudit moteur (20), des moyens de circulation (39) du liquide de chauffage entre l'enceinte (7) et des organes de chauffage disposés dans les locaux à chauffer, les calories produites par la dissipation thermique dudit moteur et par la pompe à chaleur étant transférées au liquide de chauffage, caractérisée en ce qu'elle comprend également un ballon de réserve (44) de liquide de chauffage qui est porté à une température élevée prédéterminée lorsque le moteur thermique (20) est en fonctionnement, des organes (45, 46) étant prévus pour transférer du ballon de réserve (44) ledit liquide de chauffage dans les organes de chauffage lorsque ledit moteur (20) est arrêté, et des moyens (43) pour réenclencher ledit moteur lorsque le ballon de réserve s'est vidé de tout ou partie du liquide de chauffage à haute température, et en ce que les gaz d'échappement du moteur thermique sont collectés dans un échangeur (22) disposé dans ladite enceinte (7).

2. Installation selon la revendication 1 caractérisée en ce qu'elle comprend également une première vanne à trois voies (14) dont une première entrée (14a) est reliée à une sortie du condenseur de la pompe à chaleur, tandis que les deuxième (14b) et troisième (14c) entrées sont respectivement reliées à une première entrée (46b) d'une deuxième vanne à trois voies (46) par un conduit (50) et au moteur thermique (20), le ballon de réserve (44) étant interposé entre ladite enceinte (7) et une deuxième entrée (46a) de la deuxième vanne (46) dont la troisième entrée (46c) est reliée par l'intermédiaire d'une conduite d'alimentation (49) des organes de chauffage, une conduite de dérivation (52) étant montée entre le conduit (50) et un conduit de liaison (40) reliant ladite enceinte au ballon de réserve (44); au moins deux servo-moteurs (45, 53) de commande du moteur thermique (20) et des vannes (14, 46), lesdits servo-moteurs étant assujettis à un écart déterminé par la température du liquide circulant dans les organes de chauffage et une valeur prédéterminée.

3. Installation selon la revendication 1, caractérisée en ce que les calories résiduelles des gaz d'échappement, à leur sortie de l'échangeur, sont cédées à de l'air extérieur introduit et circulant dans ladite enveloppe (8) au moyen d'un ventilateur (23).

4. Installation selon la revendication 3, caractérisée en ce que la sortie de l'échangeur (22) disposé dans l'enceinte est reliée par une conduite (33) à une conduite générale (34) d'évacuation des condensats disposés à la base de ladite envelope (8).

5. Installation selon la revendication 4, caractérisée en ce que la conduite générale (34) d'évacuation des condensats est inclinée sur l'horizontale et débouche par une de ses extrémités sur une gorge collectrice (36) ménagée à la base de ladite enveloppe (8), ladite gorge s'étendant transversalement par rapport à la direction de la conduite générale d'évacuation dont l'autre extrémité est reliée à un siphon (35).

6. Installation selon l'une des revendications 1 à 5, caractérisée en ce que l'évacuation de l'eau de l'enceinte (7) est réalisée à travers des vannes thermostatiques (15).

7. Installation selon l'une des revendications 3 à 6, caractérisée en ce que le liquide circule dans l'enceinte (7) à contre-courant des gaz d'échappement du moteur (20).

8. Installation selon la revendication 1, caractérisée en ce que le givre qui se forme éventuellement sur l'évaporateur (1) de la pompe à chaleur est éliminé au moyen des gaz d'échappement.

9. Installation selon la revendication 8, caractérisée en ce que la fonction de dégivrage est susceptible d'être réalisée pendant les périodes de marche au ralenti du moteur thermique.

10. Installation selon l'une des revendications 1 à 9, caractérisée en ce que la puissance du moteur thermique pour les basses températures est comprise entre 1 et 5 fois la puissance nécessaire pour le fonctionnement de la pompe à chaleur à 0°C.

**Patentansprüche**

1. Heizung für Wohn- und Industrieräume, von der Bauart, die ein schallisoliertes Gehäuse (8) aufweist, in welchem ein Verbrennungsmotor (20), der in einem mit Heizflüssigkeit gefüllten Behälter (7) montiert ist, eine Wärmepumpe (1—5), deren Kompressor (2) die Hauptlast des Motors (20) bildet, eine Umwälzeinrichtung für die Heizflüssigkeit zwischen dem Behälter (7) und Heizorganen angeordnet sind, die sich in den zu beheizenden Räumen befinden, wobei die durch Wärmeabgabe des Motors und der Wärmepumpe erzeugte Wärmemenge auf die Heizflüssigkeit übertragen wird, dadurch gekennzeichnet, daß sie außerdem einen Reservebehälter (44) für Heizflüssigkeit, der auf eine vorgegebene hohe Temperatur gebracht wird, wenn der Verbrennungsmotor (20) in Betrieb ist, wobei Organe (45, 46) vorgesehen sind, um von dem Reservebehälter (44) die Heizflüssigkeit in die Heizorgane su übertragen, wenn der Motor (20) angehalten ist, und Mittel (43) aufweist, um den Motor wieder einzuschalten, wenn aus dem Reservebehälter die Heizflüssigkeit hoher Temperatur vollständig oder teilweise geleert ist, und daß die Abgase des Wärmemotors in einem Wärmetauscher (22) gesammelt werden, der in dem Behälter (7) angeordnet ist.

2. Heizeinrichtung nach Anspruch 1, dadurch gekennzeichnet, daß sie außerdem ein erstes Dreiwegeventil (14) aufweist, von dem der erste Anschluß (14a) mit einem Ausgang des Kondensators der Wärmpumpe verbunden ist, während der zweite Anschluß (14b) und der dritte Anschluß (14c) über eine Leitung (50) mit einem ersten Anschluß (46b) eines zweiten Dreiwegeventils (46) bzw. mit dem Verbrennungsmotor (20) verbunden sind, wobei der Reservebehälter (44) zwischen den Behälter (7) und einen zweiten Anschluß (46a) des zweiten Ventils (46) geschaltet ist, dessen dritter Anschluß (46c) über eine Versorgungsleitung (49) an die Heizorgane angeschlossen ist, wobei eine Zweigleitung (52) zwischen der Leitung (50) und einer Verbindungsleitung (40) angeordnet ist, die den Behälter mit dem Reservebehälter (44) verbindet, wobei mindestens zwei Servomotoren (45, 53) zur Steuerung des Verbrennungsmotors (20) und der Ventile (14, 46) vorgesehen sind, wobei die Servomotoren abhängig sind von einer Abweichung, die durch die Temperatur der in den Heizorganen zirkulierenden Flüssigkeit und einem vorgegebenen Wert bestimmt ist.

3. Heizeinrichtung nach Anspruch 1, dadurch gekennzeichnet, daß die übrige Wärmemenge der Abgase am Ausgang des Wärmetauschers an die Außenluft abgegeben wird, die eingeleitet wird und in dem Gehäuse (8) mittels eines Ventilators (23) zirkuliert.

4. Heizeinrichtung nach Anspruch 3, dadurch gekennzeichnet, daß der Ausgang des Wärmetauschers (22), der in dem Behälter angeordnet ist, über eine Leitung (33) mit einer allgemeinen Leitung (34) zur Abführung der Kondensate verbunden ist, die sich an der Basis des Gehäuses (8) befinden.

5. Heizeinrichtung nach Anspruch 4, dadurch gekennzeichnet, daß die allgemeine Leitung (34) zur Abführung der Kondensate gegenüber der Horizontalen geneigt ist und mit einem ihrer Enden in einer Sammelrinne (36) mündet, die an der Basis des Gehäuses (8) ausgebildet ist, wobei die Rinne sich quer in Bezug zu der Richtung der allgemeinen Leitung zur Abführung von Kondensaten erstreckt, deren anderes Ende mit einem Siphon (35) verbunden ist.

6. Heizeinrichtung nach einem der Ansprüche 1 bis 5, dadurch gekennzeichnet, daß der Ablaß von Wasser des Behälters (7) mit Thermostatventilen (15) erfolgt.

7. Heizeinrichtung nach einem der Ansprüche 3 bis 6, dadurch gekennzeichnet, daß die Flüssigkeit in dem Behälter (7) im Gegenstrom zu den Abgasen des Motors (20) zirkuliert.

8. Heizeinrichtung nach Anspruch 1, dadurch gekennzeichnet, daß der Reif, der sich gegebenenfalls an dem Verdampfer (1) der Wärmepumpe bildet, mit Hilfe der Abgase beseitigt wird.

9. Heizeinrichtung nach Anspruch 8, dadurch gekennzeichnet, daß die Funktion der Entfrostung während der Perioden des langsamen Betriebes des Verbrennungsmotors durchführbar ist.

10. Heizeinrichtung nach einem der Ansprüche 1 bis 9, dadurch gekennzeichnet, daß die Leistung des Verbrennungsmotors für tiefe Temperaturen das 1- bis 5-fache der Leistung ausmacht, die für den Betrieb der Wärmepumpe bei 0°C erforderlich ist.

## Claims

1. Heating installation for premises for dwelling or industrial use, of the type having a sound proofed envelope (8) within which there is arranged an internal combustion engine (20) mounted in an enclosure (7) filled with heating liquid, and a heat pump (1 to 5) the compressor (2) of which constitutes the main load on said engine (20), means (39) for circulation of the heating liquid between the enclosure (7) and heating members arranged in the premises to be heated, heat produced by thermal dissipation of said engine and by the heat pump being transferred to the heating liquid, characterised in that it also comprises a reserve tank (44) for heating liquid which is brought to a predetermined increased temperature when the heat engine (20) is operating, means (45, 46) being provided to transfer from the reserve tank (44) said heating liquid to the heating members when said engine (20) is stopped, and means (43) to re-engage said engine when the reserve tank is tempty of all or part of the high temperature heating liquid, and in that the exhaust gases of the heat engine are collected in an exchanger (22) arranged in said enclosure (7).

2. Installation according to Claim 1 characterised in that it also includes a first three-way valve (14) a first inlet (14a) of which is connected to an output of the condenser of the heat pump, whereas the second (14b) and third (14c) inlets are respectively connected to a irst inlet (46b) of a second three-way valve (46) by a duct (50) and to the heat engine (20), the reserve tank (44) being interposed between said enclosure (7) and a second inlet (46a) of the second valve (46) the third inlet (46c) of which being connected through a feed duct (49) of the heating members, a branch duct (52) being mounted between the duct (50) and a connecting duct (40) connecting said enclosure to the reserve tank (44); at least two servomotors (45, 53) for controlling the heat engine (20) and the valves (14, 46), said servo-motors being controlled by the difference between the temperature of the liquid circulating in the heating mmebers and a predetermined value.

3. Installation according to Claim 1, characterised in that residual heat of the exhaust gases, at their outlet from the exchanger, is passed to exterior air sucked into and circulating within said envelope (8) by means of a fan (23).

4. Installation according to Claim 3, chracterised in that the outlet of the exchanger (22) arranged within the enclosure is connected by a duct (33) to a general duct (34) for removal of condensate deposited at the base of said envelope (8).

5. Installation according to Claim 4, characterised in that the general duct (34) for removal of condensate is inclined to the horizontal and opens at one of its ends into a collecting trough (36) formd in the base of said envelope (8), said trough extending transversely in relation to the direction of the general evacuation duct the outer extremity of which is connected to a syphon (35).

6. Installation according to one of Claims 1 to 5, characterised in that removal of water from the enclosure (7) is effected through thermostatic valves (15).

7. Installation according to one of Claims 3 to 6, characterised in that the liquid circulates in the enclosure (7) against the flow of the exhaust gases of the engine (20).

8. Installation according to Claim 1, characterised in that the frost which may form on the evaporator (1) of the heat pump is removed by means of the exhaust gases.

9. Installation according to Claim 8, characterised in that the defrosting function is capable of being effected during the periods of idling of the heat engine.

10. Installation according to one of Claims 1 to 9, characterised in that the power of the heat engine for low temperatures is between 1 to 5 times the power necessary for operation of the heat pump at 0°C.

# FIG.1

FIG.2

FIG.3